# EUROPÄISCHE PATENTANMELDUNG

(11) **EP 3 736 040 A1**
(43) Veröffentlichungstag der Anmeldung: **11.11.2020**
(21) Anmeldenummer: 19173270.0
(22) Anmeldetag: 08.05.2019
(51) Int. Cl.: B01J 19/00, C40B 60/12

(54) **VORRICHTUNG UND VERFAHREN ZUR UNTERSUCHUNG VON CHEMISCHEN REAKTIONEN**

(71) Anmelder: hte GmbH the high throughput experimentation company, 69123 Heidelberg (DE)
(72) Erfinder: SCHUMACHER, Thomas, 69123 Heidelberg (DE)
(74) Vertreter: BASF IP Association

(57) **Zusammenfassung**

Die Erfindung betrifft eine Vorrichtung zur Durchführung von chemischen Reaktionen, die zwei oder mehr parallel angeordnete Reaktoren (5, 5', 5", ...) sowie eine Reaktorsteuerungseinheit aufweist, wobei jeder Reaktor (5) mit zumindest einem Regelkanal (7) verbunden ist, der eine Regelarmatur (8) umfasst, welche über eine mit Absperrventil (10) versehene Wirkverbindungsleitung (9) mit einem gemeinsamen Regler (11) verbunden ist; die Regelkanäle (7, 7', 7", ...) sind entweder stromaufwärts oder stromabwärts in der Reaktoren (5, 5', 5", ...) angeordnet; bei einer stromaufwärtsseitigen Anordnung der Regelkanäle (7, 7', 7", ...) ist jeweils ein Regelkanal (7) in der Leitung für die Flüssigkeitszufuhr angeordnet; bei einer stromabwärtsseitigen Anordnung der Regelkanäle (7, 7', 7", ...) ist jeweils ein Regelkanal (7) in der Ausgangsleitung der Reaktoren angeordnet. Die erfindungsgemäße Vorrichtung und das erfindungsgemäße Verfahren bieten die Möglichkeit, die Drücke, die in den parallel angeordneten Reaktoren (5, 5', 5", ...) auftreten, dadurch individuell für jeden einzelnen Reaktor (5) anzupassen, dass die Regelarmaturen (8, 8', 8", ...), die über die Absperrventile (10, 10', 10", ...) entkoppelt werden, sequentiell angesteuert werden. Die Anpassung der Drücke erfolgt durch die Anpassung der Drücke in den einzelnen Regelkanälen (7, 7', 7", ...), welche mit den Reaktoren (5, 5', 5", ...) in Wirkverbindung stehen.

## Beschreibung

Das Gebiet der Anlagen- und Verfahrenstechnik zur Untersuchung von chemischen Reaktionen in parallel angeordneten Reaktoren in Verbindung mit der Untersuchung von Feststoffkatalysatoren hat sich zu einem eigenständigen Arbeitsgebiet entwickelt, das von großem wirtschaftlichem und technischem Interesse ist.

Die zunehmende Bedeutung dieses Gebietes hängt damit zusammen, dass großtechnische Prozesse mit immer höherer Präzision in immer stärker miniaturisierten Apparaturen nachgestellt werden können, die insbesondere auch im Labormaßstab betrieben werden können. Durch die verbesserte Aussagekraft von Daten, die im Rahmen von solchen Laboruntersuchungen ermittelt werden, kann auf Testuntersuchungen in Pilotanlagen verzichtet werden. Dadurch können Kosten für aufwendige Pilotanlagen eingespart und der Verbrauch an Ressourcen reduziert werden.

Im Stand der Technik sind Vorrichtungen und Verfahren zur parallelen Durchführung von chemischen Reaktionen seit mehreren Jahrzehnten bekannt. Beispielhaft für derartige Vorrichtungen ist das EP-Patent EP 1 888 224 B1 zu nennen, in dem eine Vorrichtung von parallel angeordneten Durchflussreaktoren beschrieben und beansprucht wird, die in der Reaktorausgangsleitung einen aktiv einstellbaren Durchlass für Reaktorablauf aufweisen, wobei der aktiv einstellbare Durchlass in einer Druckkammer angeordnet ist, die mit einer Druckregulierungseinheit verbunden ist. In der Patentschrift wird dargelegt, dass die gemeinsame Druckkammer vorteilhaft ist, da sich der Druck in mehreren Reaktoren mit einem einzigen Druckregler kontrollieren lässt.

Die PCT-Anmeldung WO 2005/063372 behandelt gleichfalls eine Vorrichtung zur Druck- und Flusskontrolle in parallel angeordneten Reaktoren.

Eine der Aufgaben, die der vorliegenden Erfindung zugrunde liegt, ist die Bereitstellung einer Vorrichtung zur Durchführung von chemischen Reaktionen, die eine möglichst hohe Flexibilität der zu untersuchenden Reaktionen erlaubt. Gleichzeitig ist es eine Aufgabe, chemische Reaktionen bei unterschiedlichen Reaktionsbedingungen durchzuführen.

Die Erfindung betrifft eine Vorrichtung und ein Verfahren zur Untersuchung von chemischen Reaktionen in einer Vielzahl von parallel angeordneten Reaktoren.

Insbesondere betrifft die Erfindung eine Vorrichtung zur Durchführung von chemischen Reaktionen, wobei die Vorrichtung zwei oder mehr parallel angeordnete Reaktoren (5, 5', 5", ...), eine Gaszufuhr mit Verteiler sowie eine Reaktorsteuerungseinheit aufweist, wobei jeder Reaktor (5) mit zumindest einem Regelkanal (7) verbunden ist, wobei dieser zumindest eine Regelkanal (7) zumindest ein Bauteil zum Ändern und Steuern von Stoffströmen (8) umfasst, das Bauteil zum beeinflussen des Stoffstroms (8) ist vorzugsweise ein pneumatisch aktuierter Membrandruckregler (8), der weiter vorzugsweise direkt aktuiert wird, und der über eine mit Absperrventil (10) versehene Wirkverbindungsleitung (9) mit einem gemeinsamen Druckregler (11) verbunden ist; wobei die Regelkanäle (7, 7', 7",...) stromaufwärts und/oder stromabwärts der Reaktoren (5, 5', 5", ...) angeordnet sind, stromaufwärtsseitige Anordnung der Regelkanäle bedeutet, dass in jeder Leitung für die Gaszufuhr zwischen Verteiler der Gaszufuhr und dem Reaktor jeweils zunächst eine Drossel (6) und danach ein Regelkanal (7) in jeder Leitung angeordnet sind, und stromabwärtsseitige Anordnung der Regelkanäle bedeutet, dass jeweils ein Regelkanal (7) in jeder Ausgangsleitung der Reaktoren angeordnet ist, wobei die stromaufwärtsseitigen Regelkanäle und die stromabwärtsseitigen Regelkanäle unterschiedliche Gruppen bilden, die jeweils mit einem separaten Regler (11) verbunden sind. Das Bauteil (8), vorzugsweise der pneumatisch aktuierte Membrandruckregler (8), der weiter vorzugsweise direkt aktuiert wird, wird im Weiteren als auch als Regelarmatur (8) bezeichnet.

In einer bevorzugten Ausführungsform weist die Vorrichtung zur Durchführung von chemischen Reaktionen eine Flüssigkeitszufuhr mit Leitungen auf, wobei die Leitungen der Flüssigkeitszufuhr jeweils stromabwärtsseitig der Regelkanäle (7, 7,', 7",...) für die Gaszufuhr und stromaufwärtsseitig der Reaktoren (5, 5', 5", ...) angeordnet sind, vorzugsweise ist jede Leitung zur Flüssigkeitszufuhr jeweils mit zumindest einem Regelkanal (7) ausgestattet, wobei dieser zumindest eine Regelkanal (7) zumindest eine Regelarmatur (8) umfasst, welche über eine mit einem Absperrventil (10) versehene Wirkverbindungsleitung (9) mit einem gemeinsamen Regler (11) verbunden ist, vorzugsweise ist die Flüssigkeitszufuhr mit einer Pumpe (3) ausgestattet, weiter vorzugsweise mit einer Hochdruckpumpe (3). Da sich die Regelkanäle (7, 7, 7', 7", ...) in der Zuführungsleitung der Flüssigkeiten zu den Reaktoren befinden, sind hier ebenfalls Drosseln (6, 6', 6",...) stromaufwärts der Regelkanäle und stromabwärts des Verteilers für die Flüssigkeit erforderlich. Die Begriffe Reaktoren und Reaktionsräume haben die gleiche Bedeutung im Rahmen der vorliegenden Beschreibung.

Ein Aspekt der Erfindung ist, dass mittels der in den Wirkverbindungsleitungen (9, 9', 9", ...) zwischen dem Druckregler (11) und den Regelarmaturen (8, 8', 8", ...) angeordneten Absperrventile (10, 10', 10", ...) eine vorteilhafte Entkopplung der Reaktionsräume (5, 5', 5", ...) und der mit den Reaktionsräumen verbundenen Regelventilen (8, 8', 8", ...) realisiert wird. Es ist hierdurch möglich, Reaktionen, die in den parallel angeordneten Reaktoren durchgeführt werden, auf unterschiedlichen Druckstufen zu betreiben, die unabhängig voneinander sind. Dadurch können eine Vorrichtung und ein Verfahren bereitgestellt werden, das eine größere Flexibilität aufweist gegenüber denjenigen Vorrichtungen und Verfahren, die bereits bekannt sind.

Vorzugsweise betrifft die Erfindung auch eine Vorrichtung zur Durchführung von chemischen Reaktionen, die dadurch gekennzeichnet ist, dass die Anzahl der parallel angeordneten Reaktoren (5, 5', 5", ...) im Bereich von 4-40 liegt, vorzugsweise im Bereich von 4 - 20, weiter vorzugsweise im Bereich von 4-16 liegt, wobei die einzelnen Reaktoren vorzugsweise ein Innenvolumen aufweisen, das im Bereich von 1 - 500 mL liegt, weiter vorzugsweise im Bereich von 2 - 250 mL, weiter vorzugsweise im Bereich von 2,5 - 150 mL, und/oder dass jeder Reaktor mit je einem Temperatursensor ausgestattet ist, vorzugsweise sind die Temperatursensoren in den Reaktoren angeordnet, wobei die Temperatursensoren mit einer gemeinsamen Temperatur-Regeleinheit verbunden sind, die sich vorzugsweise innerhalb eines Schaltschranks befindet.

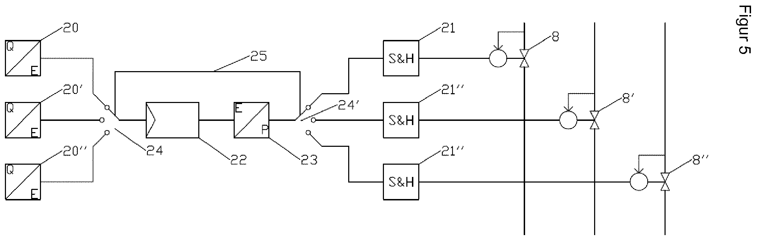

Im Gegensatz zu einem kontinuierlich geregelten System ist es beim erfindungsgemäßen System bevorzugt, dass das Ergebnis des Reglers als Parameter vorgegeben und gespeichert wird. Beispielsweise geschieht dies durch die Einstellung und Speicherung von geometrischen Größen (Nadelstellung) oder thermischen Größen (Heizleistung). Da der Regelprozess nicht mehr kontinuierlich stattfindet, sondern sequentiell, ergibt sich eine hohe Flexibilität bezüglich des Regelergebnisses und des Betriebs der erfindungsgemäßen Vorrichtung. Vorteilhaft ist auch, dass für die Bestimmung des Drucks in den Reaktoren (5, 5', 5", ...) beziehungsweise in den mit den Reaktoren verbundenen Regelkanälen (7, 7', 7", ...) jeweils der identische Druckregler (11) eingesetzt wird. Dadurch wird eine besonders hohe Genauigkeit erreicht. Eine Regelung erfolgt durch eine sequentielle Zuweisung neuer Parameter an die Regelkanäle. Die alten Parameter werden dabei überschrieben. Ein solches System ähnelt dem Arbeitsprinzip eines zeitlich gemutiplexten Reglers als einem konventionellen Regelkreis. Im konventionellen Regelkreis besteht eine permanenten 1:1 Zuordnung zwischen Eingang und Ausgang, während im gemultiplexten System entsprechend Figur 5 nur zeitweise eine Zuordnung zwischen Sensor, Regler und Stellglied besteht. Durch Verkürzung der Taktzeiten wird jedoch der kontinuierliche Fall angenähert. Entscheidend am gemultiplexten System ist, dass für die Zwischenzeit, in der keine Verbindung zwischen Sensor und Regler besteht, das Ergebnis des Regelvorgangs - der Stellwert - zwischengespeichert wird. Dies wird beispielsweise durch die Bauelemente ermöglicht, die in Figur 5 in Form von Blöcken S&H mit den Bezugszeichen (21, 21', ...) dargestellt sind. In der Praxis wird die Speicherung des Sollwerts für die Regler beziehungsweise die Regelarmatur (8) dadurch bewerkstelligt, dass in dem Leitungsvolumen zwischen den Ventilen (10, 10',...) den Leitungen (9, 9',...) und dem Druckregler (11) der Solldruck aus dem Druckregler (11) entnommen wird. Durch das Verschließen der Ventile (10, 10',...) wird der Wert des Drucks gespeichert. Die Zahl der Regelkreise, die ein solches System benötigt, ist nicht mehr abhängig von der Zahl der Reaktoren, sondern nur noch von der Zahl der in einem Regelkanal vorhandenen unabhängigen verfahrenstechnischen Parameter. Diese können beispielhaft sein: Temperaturgrößen, Durchflussgrößen, Druckgrößen oder auch komplexere Größen wie die Leistung eines Rührers in einem Tankreaktor. Somit ist vorliegend ein höherer Grad der Parallelisierung erreichbar, da ein wesentliches Hindernis, die zunehmende Komplexität der Vorrichtung mit zunehmender Anzahl an Regelkreisen aufgrund von einer erhöhten Anzahl von physikalischen Bauelemente, weniger relevant wird.

Insbesondere betrifft die vorliegende Erfindung das folgende Verfahren:
Verfahren zur Durchführung von chemischen Reaktionen unter Verwendung einer Vorrichtung wie innerhalb der hier gegebenen Abhandlung beschreiben, wobei das Verfahren nachfolgende Schritte umfasst:
(i) kontrollierte Zuführung von Eduktfluidströmen in die Innenräume von Reaktoren (5, 5', 5", ...),
(ii) Inkontaktbringen der Eduktfluidströme mit in den Reaktoren (5, 5', 5", ...) befindlichen Katalysatoren,
(iii) Ableitung der Produktfluidströme durch Ausgangsleitungen,
(iv) Öffnen eines Absperrventils (10) eines ausgewählten Regelkanals (7),
(v) Aufnahme des Druck-Ist-Wertes der Regelarmatur (8) zum Ändern und Steuern von Stoffströmen am Druckregler (11) und Vergleich mit einem vorgegebenen Ziel-Wert
(vi) Einregeln eines Druckwertes der Regelarmatur (8) am Druckregler (11) auf einen Ziel-Wert, sowie anschließendes Schließen des Absperrventils (10) eines ausgewählten Regelkanals (7),
wobei die Verfahrensschritte (iv) - (vi) wiederholt werden, wobei sämtliche Regelkanäle der in der Vorrichtung angeordneten Reaktoren den Schritten (iv) - (vi) unterzogen werden.

Möglich ist auch eine Ausführung der Vorrichtung, die pro Reaktor zwei oder mehr Regelkanäle (7, 7') aufweisen, vorzugsweise vier oder mehr Regelkanäle (7, 7', 7", ...). Zur Differenzierung der einzelnen Regelkanäle ist es möglich, diese als stromabwärtsseitig angeordneten Regelkanal (7d) und stromaufwärtsseitig angeordneten Regelkanal (u) zu benennen. Der Buchstaben d bezieht sich auf down-stream und der Buchstabe u bezieht sich auf up-stream. Weiterhin kann bei dem stromaufwärtsseitig angeordnete Regelkanal (7u) zwischen dem stromaufwärtsseitig angeordneter Regelkanal für Gase (g) und dem stromaufwärtsseitig angeordneter Regelkanal für Flüssigkeiten (I) unterschieden werden. Im Rahmen dieser Kennzeichnung würden die Bauelemente 7d, 7ug und 7ul vorliegen. Da sich die Erfindungen auf Vorrichtungen mit parallel angeordneten Reaktoren bezieht, sind dann entsprechend des Parallelisierungsgrads die Bauelemente Regelkanäle (7d, 7d', 7d", ...), (7ug, 7ug', 7ug", ...) und (7ul, 7ul', 7ul", ...).

Beispielsweise kann der eine Regelkanal (7) stromaufwärts und der zweite Regelkanal (7) stromabwärts des jeweiligen Reaktors (5) angeordnet sein. In dieser Anordnung ist der stromaufwärtsseitige Regelkanal (7) in der Leitung zur Gas- oder Flüssigkeitszufuhr angeordnet, der stromabwärtsseitige Regelkanal in der Ausgangsleitung des Reaktors (5). Sofern sowohl die Gas- als auch die Flüssigkeitszufuhr geregelt werden soll, kann ein weiterer Regelkanal (7) stromaufwärts angeordnet sein. Sofern die Gaszufuhr geregelt wird, so ist in der Leitung zwischen dem Verteiler der Gaszufuhr und dem Regelkanal (7) eine Drossel (6) angeordnet. Die Drossel (6) wirkt als Fluss-Restriktor und bewirkt eine Entkopplung der Druckschwankungen, die durch die Leitung der gemeinsamen Gaszuführung verursacht werden können. Als Drossel (6) wird ein Element aus der Gruppe Restriktor, Kapillarrestriktor, Lochblende, Fritte, Mikrokanal verwendet. Analoges gilt hinsichtlich der Drosseln für die in die Flüssigkeits-zufuhr eingebauten Regelkanäle (7). Auch hier ist die gegenseitige Druckentkopplung vorzusehen.

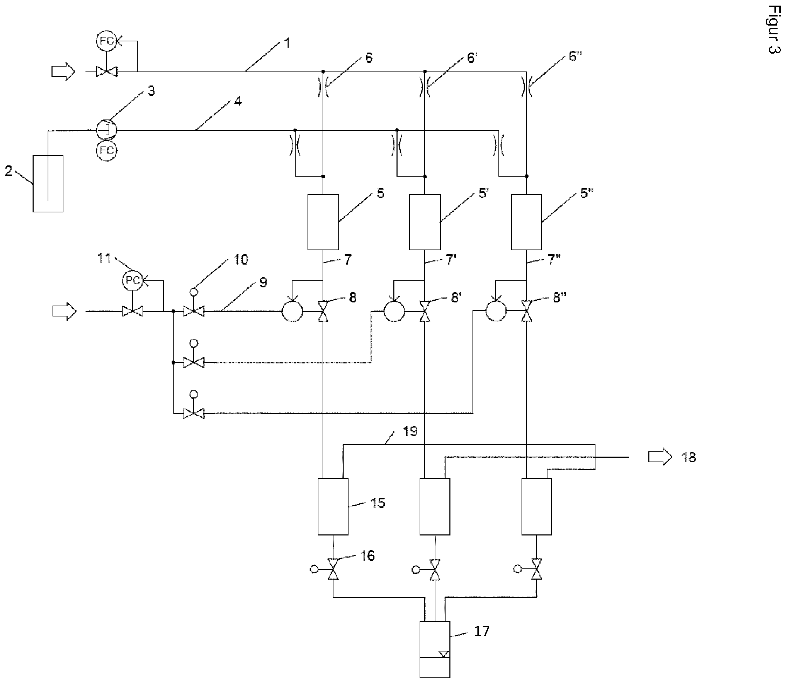

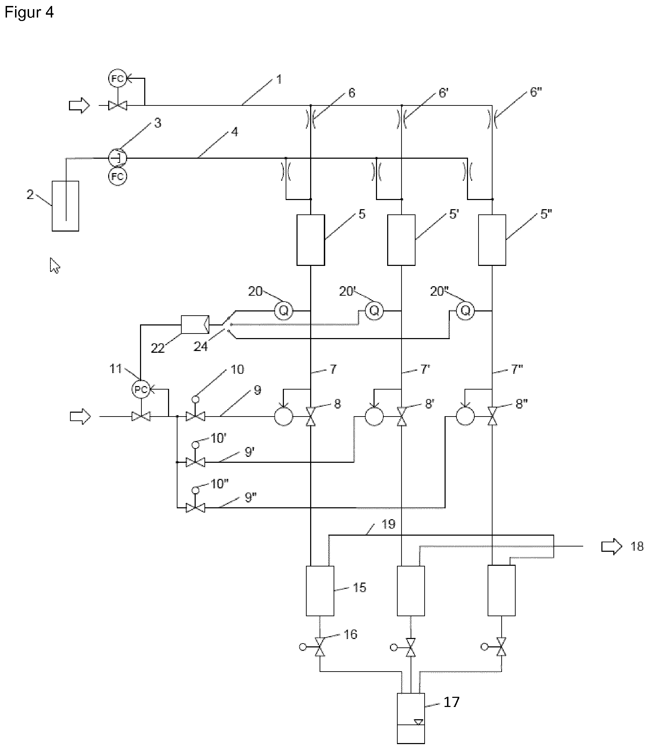

Jeder Reaktor (5) verfügt über eine separate Ausgangsleitung. In einer bevorzugten Ausführungsform steht die Ausgangsleitung mit einem Abscheider (15) in Wirkverbindung. Der untere Teil des Abscheiders (15) weist eine Ablaufleitung auf, die zur Ableitung von Flüssigkeiten aus dem Abscheider (15) dient. Vorzugsweise ist in der Ablaufleitung ein Ventil (16) angeordnet. Durch Öffnen und Schließen des Ventils (16) wird die Entnahme der Flüssigkeit aus dem Abscheider (15) bewirkt. In einer bevorzugten Ausführungsform wird die Ableitung mit einem Sammelgefäß (17) verbunden. In den Figuren 3 und 4 ist das Sammelgefäß (17) als ein gemeinsames Sammelgefäß dargestellt, das mit einer Gruppe von Abscheidern (19, 19', 19", ...) in Wirkverbindung steht. Jeder Abscheider (15, 15,', 15", ...) weist je eine Ableitung (19, 19', 19", ...) für gasförmige Komponenten auf, die zu einer gemeinsamen Abluftleitung beziehungsweise zu einem Gasauslass (18) führt. In Wirkverbindung mit den Ableitungen (19, 19', 19", ...) steht vorzugsweise zumindest eine Analyseneinheit, um zum ausgewählten Zeitpunkt analytische Charakterisierungen an den einzelnen Gasströmen vorzunehmen, bevor diese der gemeinsamen Abluftleitung beziehungsweise dem Gasauslass (18) zugeführt werden. In einer bevorzugten Ausführungsform der Vorrichtung führen die Ableitungen (19, 19', 19", ...) zu einem oder mehreren Multiportventilen. Bei dem Multiportventil handelt es sich vorzugsweise um ein Hochtemperaturemultiportventil.

In einer weiteren Ausführungsform ist in der Ablaufleitung aus dem Abscheider (15) ein weiterer Abscheider oder eine Probenentnahmestelle für Flüssigkeiten angeordnet. Die Probenentnahmestelle kann derart ausgestaltet sein, dass an die Probenentnahmestelle ein automatischer Probennehmer angeschlossen ist. In einer bevorzugten Ausführungsform umfasst der automatische Probennehmer eine Regalablage mit Glasfläschchen, in die Teile der Probenflüssigkeit aus den Abscheidern transferiert werden. Die mit der Probenflüssigkeit befüllten Proben werden vorzugsweise einer analytischen Charakterisierung zugeführt.

Die Vorrichtung zur Durchführung von chemischen Reaktionen kann bei Drücken verwendet werden, die im Bereich von 0,5 - 300 bar liegen, vorzugweise im Bereich von 1 - 250 bar, weiter vorzugsweise im Bereich von 1,2 - 220 bar.

Das Verfahren zur Durchführung von chemischen Reaktionen bezieht sich auf Reaktionen, die bei einer Temperatur im Bereich von 20 - 1000 °C liegen, vorzugsweise in einem Bereich von 50 - 900 °C, weiter vorzugsweise in einem Bereich von 100 - 800 °C.

Beispielhaft wird die Durchführung des erfindungsgemäßen Verfahrens (Figur 3) für den Fall beschrieben, dass die verwendete Vorrichtung mit drei parallel angeordneten Reaktoren (5, 5', 5") ausgestattet ist, die jeweils einen Regelkanal (d.h. die Regelkanäle 7, 7', 7") in der Ausgangsleitung aufweisen, so dass der erste Reaktor mit dem Regelkanal RK1 (7), der zweite Reaktor mit dem Regelkanal 2 (7'), und so weiter verbunden sind. Zu Beginn der Untersuchung sind die Absperrventile der Regelkanäle 1 bis 3 (das heißt die Regelkanäle (7) bis (7")) geschlossen. Es erfolgt eine Zufuhr von Eduktfluid zu einem oder mehreren Reaktoren. Eduktfluid wird mit dem Katalysator in Kontakt gebracht. Produktfluid wird durch die mit Regelkanal (7) versehene Ausgangsleitung zum Abscheider geführt. Ein ausgewähltes Absperrventil wird geöffnet, die ausgewählte Regelarmatur (8) steht in Wirkverbindung mit dem Druckregler (11). Es wird eine Messung es Ist-Wertes durchgeführt, der Wert wird mit einem in der Programmsteuerung hinterlegten Ziel-Wert verglichen und es wird eine Anpassung vorgenommen. Nachdem der Zielwert erreicht wird, wird das Absperrventil geschlossen. Das Verfahren wird wiederholt, wobei das Verfahren auf die übrigen Regelkanäle angewendet wird. Mittels des erfindungsgemäßen Verfahrens ist es möglich, innerhalb einer Vielzahl von Reaktoren eine unabhängige und entkoppelte Druckkontrolle vorzunehmen. Es wird lediglich ein Druckregler zur Druckkontrolle des Drucks verwendet werden, um den Druck in einer Vielzahl von Reaktoren zu kontrollieren, beziehungsweise den drei Reaktoren wie im Beispiel dargestellt ist, das durch Figur 3 gegeben wird.

Mittels des Verfahrens werden die einzelnen zu den Reaktoren gehörenden Regelkanäle (7, 7', 7", 7'") zeitlich gestaffelt abgetastet (= gemultiplext), um die Einstellung der einzelnen Regelarmaturen (8, 8', 8", 8'") vorzunehmen.

Vorzugsweise weisen die Bauelemente (8), die in der erfindungsgemäßen Vorrichtung angeordnet werden, kurze Einschwingzeiten und schnelle Antwortzeiten auf. Bei dem Bauelement (8) handelt es sich vorzugsweise um eine Regelarmatur (8). Darüber hinaus beziehen sich die kurzen Ansprechzeiten auch auf die Absperrventile (10, 10', 10", ...) und die Drucksensoren (13), sofern die Vorrichtung mit Drucksensoren (13, 13', 13", ...) ausgestattet ist. Besonders geeignet sind diejenigen Bauelemente, einschließlich der Regelarmaturen (8, 8', 8", ...), deren Einschwingzeit im Bereich ist, der < 20 Sekunden ist, vorzugsweise < 5 Sekunden, weiter vorzugsweise < 2 Sekunden.

Beschreibung der Eigenschaften der Bauelemente in bevorzugten Ausführungsformen: In einer bevorzugten Ausführungsform ist die Vorrichtung dadurch gekennzeichnet, dass das Bauteil (8) eine Regeldynamik hinsichtlich des Durchflusses aufweist, die im Bereich von 1 : 100 liegt, vorzugsweise im Bereich von 1 : 1.000, weiter vorzugsweise im Bereich von 1 : 10.000. Die Regeldynamik ergibt sich aus dem Verhältnis des kleinsten und größten Leitwerts der Regelarmatur.

Insbesondere ist eine Ausführungsform der erfindungsgemäßen Vorrichtung dadurch gekennzeichnet, dass der Druckregler in der Ausgangsleitung zur Ableitung von Produktstrom eine Regelgüte aufweist, deren Abweichung in Bezug auf den Sollwert < 10 % ist, vorzugsweise ist die Abweichung in Bezug auf den Sollwert < 5 % und weiter vorzugs-weise ist die Abweichung in Bezug auf den Sollwert < 1 %, und/oder die Einschwingzeit des Reglers im Bereich von 0,1 - 30 Sekunden liegt, vorzugsweise liegt die Einschwingzeit < 10 Sekunden, weiter vorzugsweise < 5 Sekunden, und insbesondere vorzugsweise < 2 Sekunden.

Die Dauer der Durchführung eines Verfahrenszyklus pro Regelkanal liegt im Zeitbereich von 1 - 60 Sekunden, vorzugsweise im Zeitbereich von 2-30 Sekunden. Als bevorzugte Bauteile (8, 8', 8", ...) beziehungsweise Regelarmaturen (8, 8', 8", ...) werden Armaturen verwendet, die eine internen Membran aufweisen.

Nachfolgend wird eine Beschreibung des Verfahrens unter Verwendung einer Vorrichtung mit parallel angeordneten Reaktoren gegeben. Die Abfrage der einzelnen Regelkanäle RKᵢ kann sequentiell erfolgen oder auch in einer von der Programmsteuerung bestimmten Weise. In einer sequentiellen Weise werden die Regelkanäle RKᵢ der Reihe nach abgetastet und angepasst. Im Fall der Vorrichtung mit vier parallel angeordneten Reaktoren 5 - 5'" erfolgt die Reihenfolge in sequentieller Verfahrensführung gemäß dem Schema:
RK₁, RK₂, RK₃, RK₄ - RK₁, RK₂, RK₃, RK₄ - RK₁, RK₂, RK₃, RK₄-...

In einer nicht sequentiellen Betriebsweise kann die Programmsteuerung anhand der ermittelten Druckänderungen die Reihenfolge beziehungsweise die Auswahl der jeweiligen Regelkanäle bei der Durchführung der Anpassungen selber bestimmen. Dabei wird berücksichtigt, welche Druckänderungen innerhalb der einzelnen Reaktoren auftreten. Diejenigen Reaktoren, in denen größere Druckänderungen auftreten, werden vorzugsweise einer häufigeren Auswahl unterzogen.

Die nichtsequentielle Verfahrensführung kann beispielsweise nach dem folgenden Schema erfolgen:
Schema A:
   RK₁, RK₂, RK₃, RK₄ - RK₁, RK₃, RK₂, RK₃, RK₄, RK₃ - RK₁, RK₃, RK₂, RK₃, RK₄, RK₃ - ... Oder
Schema B:
   RK₁, RK₂, RK₃, RK₄ - RK₁, RK₂, RK₃, RK₂, RK₄, RK₂ - RK₁, RK₂, RK₃, RK₂, RK₄, RK₁ - ...

Gemäß den Ausführungsbeispielen nach den Schemata A und B werden die Regelkanäle sämtlicher Kanäle jeweils in drei Sätzen abgetastet. Im Fall vom Schema A wurde beobachtet, dass Regelkanal 3 (beziehungsweise RK₃) Druckveränderungen zeigt, die in einem kürzeren Zeitfenster liegen als die übrigen Regelkanäle. Somit wird die Anpassung des Wertes von Regelkanal 3 mit einer häufigeren Frequenz durchgeführt als die restlichen Regelkanäle. Das gleiche ist der Fall für das Schema B, wobei im Schema B die Änderungen im Regelkanal 2 (RK₂) ermittelt wurden und entsprechend der Regelkanal RK₂ einer häufigeren Anpassung unterzogen wird als die übrigen Kanäle.

In weiteren Ausführungsform kann die erfindungsgemäße Vorrichtung einen zweiten Druckregler (11') aufweisen. Mittels des zweiten Druckreglers (11') kann eine ausgewählte Gruppe von Regelkanälen angesteuert werden, so dass das erfindungsgemäße Verfahren innerhalb der Vorrichtung auch parallel durchgeführt werden kann. Beispielsweise regelt der erste Druckregler (11) die Regelkanäle 1 bis 4 und der zweite Druckregler die Regelkanäle 5 bis 8. Dieses Beispiel bezieht sich auf eine Vorrichtung, die mit acht parallel angeordneten Reaktoren ausgestattet ist. Im Fall das die Vorrichtung mit sechzehn parallel angeordneten Reaktoren ausgestattet ist, so regelt der erste Druckregler die Regelkanäle 1 bis 8 und der zweite Druckregler die Regelkanäle 9 bis 16.

Bezüglich der Drucksensoren ist das Folgende zu sagen. In einer weiter bevorzugten Ausführungsform der erfindungsgemäßen Vorrichtung ist an die Ausgangsleitung der einzelnen parallel angeordneten Reaktoren jeweils ein Drucksensor angeschlossen. Der Drucksensor registriert den Druckwert in der Ausgangsleitung, die dem Druckwert in dem Reaktor entspricht. Das Vorhandensein von Drucksensoren in den einzelnen Ausgangsleitungen ermöglicht eine effiziente Drucküberwachung der einzelnen Reaktoren, die zusätzlich zur individuelle Druckkontrolle hinzukommt. Die am Sensor gemessenen Druckwerte werden an die Programmsteuerung weitergeleitet. Die Programmsteuerung analysiert die Druckwerte, die in den Ausgangsleitungen bestimmt werden. Anhand der Analysenergebnisse trifft die Programmsteuerung eine Auswahl, um diejenigen Regelkanälen bevorzugt anzupassen, die Druckänderungen zeigen.

Die Vorrichtung und das Verfahren zur Durchführung von chemischen Reaktionen umfassen auch eine Datenbank, die mit der Programmsteuerung verbunden ist. In der Datenbank sind die Reaktionsparameter hinterlegt, die beispielhaft Druck, Temperatur, Gaslast umfassen.

Bezüglich der erfindungsgemäßen Vorrichtung ist festzustellen, dass es sich bei den parallel angeordneten Reaktoren vorzugsweise um "konventionelle" Reaktoren handelt. Konventionelle Reaktoren sind Reaktoren, deren Abmessungen größer sind als die typischen Abmessungen von Mikroreaktoren. Bei Mikroreaktoren handelt es sich um Reaktoren, die durch ein Oberflächen-zu-Volumenverhältnis gekennzeichnet sind, das > 2 ist und die ein Innenvolumen aufweisen, das < 1 mL ist.

Zur Nennung der einzelnen Bauelemente und der damit verbundenen Bezugszeichen ist festzustellen, dass einige Bauelemente mehrfach in der Vorrichtung vorhanden sind, und zwar in Abhängigkeit des Grades der Parallelisierung der Vorrichtung. Um dies bei den Bezugszeichen in der entsprechenden Weise zu berücksichtigen wurden diejenigen Bauelemente, die mehrfach vorhanden sind, mit Hochkommazeichen beziehungsweise Oberstrichen versehen. Für den Fall, dass sich die Beschreibung auf ein einzelnes Bauelement bezieht, so wurden keine Hochkommazeichen beigefügt, an denjenigen Stellen, an denen eine Gruppe von Bauelementen beschrieben wird, wurden die Hochkommazeichen hinzugefügt. Beispielsweise ist ein einzelner Reaktor durch das Bezugszeichen (5) gekennzeichnet, die Gruppe von mehreren Reaktoren wird durch die Bezugszeichen (5, 5', 5", ...) gekennzeichnet. Für den Fachmann ist es klar, was diese Art der Kennzeichnung im Einzelnen zu bedeuten hat, so dass darin keine Einschränkung der Erfindung zu sehen ist, wenn die Hochkommazeichen sich in der Anzahl unterscheiden sollten.

Die Figuren illustrieren bevorzugte Ausführungsformen der erfindungsgemäßen Vorrichtung, die jedoch in keiner Weise auf die dargestellten Ausführungsformen beschränkt sind. Daher ist es möglich, dass die erfindungsgemäße Vorrichtung auch in weiteren Ausführungsformen vorliegt, die eine Anlehnung an die dargestellten Ausführungsformen aufweist und auch unabhängig von den dargestellten Ausführungsformen ist.

### Beschreibung der Figuren:

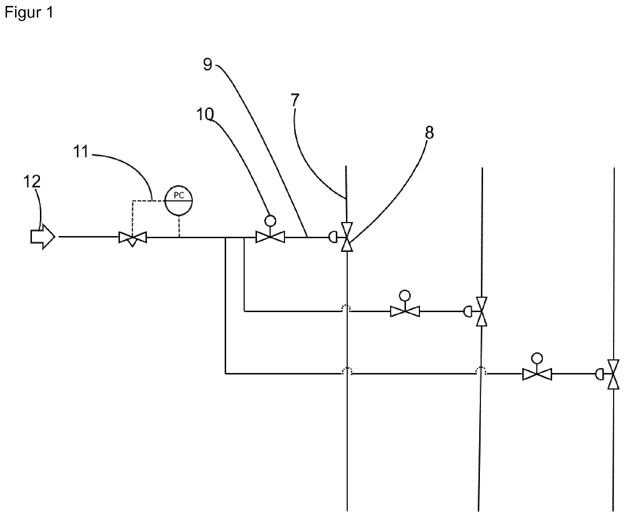

- Figur 1: zeigt eine schematische Darstellung eines Ausschnitts aus einer erfindungsgemäßen Vorrichtung, die mit drei parallel angeordneten Regelkanälen ausgestattet ist. Jeder der Regelkanäle (7, 7,', 7") ist mit einer Regelarmatur (8, 8', 8") versehen, wobei jede Regelarmatur (8, 8', 8") über die Wirkverbindungsleitung (9, 9', 9"), in der je ein Absperrventil (10, 10', 10") angeordnet ist, mit einem gemeinsamen Druckregler (11) verbunden ist.

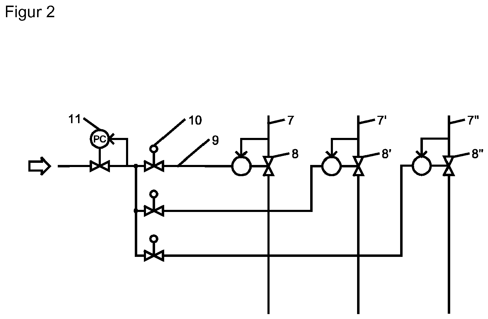

- Figur 2: zeigt eine schematische Darstellung eines Ausschnitts aus der erfindungsgemäßen Vorrichtung, die in Verbindung mit drei parallel angeordneten Reaktoren (5, 5', 5") eingesetzt wird. In der Vorrichtung ist in jeder Ausgangsleitung ein Drucksensor (13) enthalten, wobei die Drucksensoren (13) nicht eingezeichnet sind.
- Figur 3: zeigt eine schematische Darstellung der erfindungsgemäßen Vorrichtung zur Durchführung von chemischen Reaktionen, die mit drei parallel angeordneten Reaktoren (5, 5', 5") ausgestattet ist. Die Ausgangsleitungen der Reaktoren sind mit je einer Regelarmatur (8, 8', 8") versehen, die über Wirkverbindungsleitungen (9, 9', 9") und Absperrventile (10, 10', 10") mit einem gemeinsamen Druckregler (11) verbunden sind.
- Figur 4: zeigt eine schematische Darstellung der Vorrichtung, die mit drei parallel angeordneten Reaktoren (5, 5', 5") ausgestattet ist, wobei die Regelkanäle (7, 7', 7") jeweils stromabwärts der Reaktoren (5, 5', 5") angeordnet sind.
- Figur 5: zeigt eine schematische Darstellung des Teils der Vorrichtung, der in Verbindung mit drei parallel angeordneten Reaktoren (5, 5', 5") verwendet wird, wobei der Teil der Vorrichtung jeweils die Sensoren in den Zuführungsleitungen darstellt, die mit den Regelarmaturen (8, 8', 8") in Wirkverbindung stehen.

### Bezugszeichenliste

- 1: - Eduktgaszufuhr
- 2: - Flüssigkeitsbehälter
- 3: - Flüssigkeitszufuhr mit Pumpe
- 4: - Leitung
- 5, 5', 5", ...: - Reaktor
- 6, 6', 6", ...: - Drossel
- 7, 7', 7", ...: - Regelkanal
- 8, 8', 8", ...: - Stellglied
- 9: - Wirkverbindungsleitung
- 10: - Absperrventil
- 11: - Druckregler
- 11b: - Ventil des Druckreglers
- 12: - Gaszufuhr
- 13, 13', 13", ...: - Drucksensor
- 14: - /
- 15, 15', 15", ...: - Abscheider
- 16, 16', 16", ...: - Ventil
- 17: - Sammelgefäß
- 18: - Gasauslass
- 19, 19', 19", ...: - Gasausgangsleitung
- 20, 20', 20": - Sensor für eine Qualitätsgröße Q, z.B. Temperatur, Fluss,
- 21, 21', 21': - Einrichtung zur Speicherung des Stellgröße für die Stellglieder (8, 8', 8")
- 22: - Regler
- 23: - elektropneumatischer Wandler
- 24: - Umschalter für Ausgangssignal der Sensoren (20, 20'...)
- 24': - Umschalter für den Stellwert des Reglers; beispielsweise pneumatisch
- 25: - Synchronisierung der eingangs- und ausgangsseitigen Schalter / Umschaltung

## Patentansprüche

1. Vorrichtung zur Durchführung von chemischen Reaktionen, wobei die Vorrichtung zwei oder mehr parallel angeordnete Reaktoren (5, 5', 5", ...), eine Gaszufuhr mit Verteiler sowie eine Reaktorsteuerungseinheit aufweist, wobei jeder Reaktor (5) mit zumindest einem Regelkanal (7) verbunden ist, wobei dieser zumindest eine Regelkanal (7) zumindest ein Bauteil zum Ändern und Steuern von Stoffströmen (8), vorzugsweise eine Regelarmatur (8), umfasst, welches über eine mit Absperrventil (10) versehene Wirkverbindungsleitung (9) mit einem gemeinsamen Druckregler (11) verbunden ist; wobei die Regelkanäle (7, 7', 7", ...) stromaufwärts und/oder stromabwärts der Reaktoren (5, 5', 5", ...) angeordnet sind, stromaufwärtsseitige Anordnung der Regelkanäle bedeutet, dass in jeder Leitung für die Gaszufuhr zwischen Verteiler der Gaszufuhr und dem Reaktor (5) jeweils zunächst eine Drossel (6) und danach ein Regelkanal (7) in jeder Leitung angeordnet sind, und stromabwärtsseitige Anordnung der Regelkanäle (7) bedeutet, dass jeweils ein Regelkanal (7) in jeder Ausgangsleitung der Reaktoren angeordnet ist, wobei die stromaufwärtsseitigen Regelkanäle und die stromabwärtsseitigen Regelkanäle unterschiedliche Gruppen bilden, die jeweils mit einem separaten Druckregler (11) verbunden sind.

2. Vorrichtung zur Durchführung von chemischen Reaktionen nach Anspruch 1, wobei die Vorrichtung eine Flüssigkeitszufuhr mit Leitungen aufweist, wobei die Leitungen der Flüssigkeitszufuhr jeweils stromabwärtsseitig der Regelkanäle (7, 7', 7", ...) für die Gaszufuhr und stromaufwärtsseitig der Reaktoren angeordnet sind, vorzugsweise ist jede Leitung zur Flüssigkeitszufuhr jeweils mit zumindest einem Regelkanal (7) ausgestattet, wobei dieser zumindest eine Regelkanal (7) zumindest ein Bauteil zum Ändern und Steuern von Stoffströmen (8), vorzugsweise der Regelarmatur (8), umfasst, welches über eine mit Absperrventil (10) versehene Wirkverbindungsleitung (9) mit einem gemeinsamen Regler (11) verbunden ist, vorzugsweise ist die Flüssigkeitszufuhr mit einer Pumpe (3) ausgestattet, weiter vorzugsweise mit einer Hochdruckpumpe (3).

3. Vorrichtung zur Durchführung von chemischen Reaktionen nach Anspruch 1 oder Anspruch 2, die **dadurch gekennzeichnet ist, dass** die Anzahl der parallel angeordneten Reaktoren (5) im Bereich von 4 - 40 liegt, vorzugsweise im Bereich von 4 - 20, weiter vorzugsweise im Bereich von 4 - 16 liegt, wobei die einzelnen Reaktoren vorzugsweise ein Innenvolumen aufweisen, das im Bereich von 1 - 500 mL liegt, weiter vorzugsweise im Bereich von 2 - 250 mL, weiter vorzugsweise im Bereich von 5 - 150 mL, und/oder dass jeder Reaktor mit je einem Temperatursensor ausgestattet ist, vorzugsweise sind die Temperatursensoren in den Reaktoren angeordnet, wobei die Temperatursensoren mit einer gemeinsamen Temperatur-Regeleinheit verbunden sind, die sich vorzugsweise innerhalb eines Schaltschranks befindet.

4. Vorrichtung zur Durchführung von chemischen Reaktionen nach einem der Ansprüche 1 - 3, die **dadurch gekennzeichnet ist, dass** die Regelkanäle (7, 7', 7", ...) stromabwärts der Reaktoren (5, 5', 5", ...) angeordnet sind, wobei vorzugsweise in den Ausgangsleitungen der Reaktoren (5, 5', 5", ...) Drucksensoren (13, 13', 13", ...) angeordnet sind, wobei es bevorzugt ist, dass die Drucksensoren (13, 13', 13", ...) mit einem gemeinsamen Druckregler (11) verbunden sind.

5. Vorrichtung zur Durchführung von chemischen Reaktionen nach einem der Ansprüche 1 - 4, die **dadurch gekennzeichnet ist, dass** die Regelkanäle (7, 7', 7", ...) stromaufwärts der Reaktoren (5, 5', 5", ...) angeordnet sind, wobei vorzugsweise in den Ein- oder Ausgangsleitungen der Reaktoren (5, 5', 5", ...) Durchflusssensoren angeordnet sind.

6. Vorrichtung zur Durchführung von chemischen Reaktionen nach Anspruch 2, die **dadurch gekennzeichnet ist, dass** die Regelkanäle (7, 7', 7", ...) stromaufwärts der Reaktoren angeordnet sind, wobei vorzugsweise in einer gemeinsamen Ausgangsleitung der Reaktoren (5, 5', 5", ...) mindestens ein Durchflusssensor angeordnet ist. Dieser Durchflusssensor wird mit einem Auswahlventil beziehungsweise einem Multiportventil mit einem einzelnen Reaktorausgang verbunden.

7. Vorrichtung zur Durchführung von chemischen Reaktionen nach einem der Ansprüche 1 - 6, die **dadurch gekennzeichnet ist, dass** die Ausgangsleitungen der Reaktoren (5, 5', 5", ...) mit je einem Abscheider (15, 15', 15", ...) in Wirkverbindung stehen, wobei der Abscheider (15, 15', 15", ...) eine Ableitung für Flüssigkeiten und eine Ausgangsleitung (19, 19', 19",...) für gasförmige Fluide aufweist.

8. Vorrichtung zur Durchführung von chemischen Reaktionen nach einem der Ansprüche 1 - 7, die **dadurch gekennzeichnet ist, dass** die Ableitungen Reaktoren (5, 5', 5", ...) zu einem gemeinsamen Sammelbehälter (17) oder die Ableitungen der Abscheider (15) zu einem gemeinsamen Sammelbehälter (17) führen, wobei die Ableitungen der Abscheider (15, 15', 15", ...) mit Ventilen (16, 16', 16", ...) ausgestattet sind.

9. Verfahren zur Durchführung von chemischen Reaktionen unter Verwendung einer Vorrichtung gemäß der Ansprüche 1 - 8, wobei das Verfahren nachfolgende Schritte umfasst:
(i) kontrollierte Zuführung von Eduktfluidströmen in die Innenräume von Reaktoren (5, 5', 5", ...),
(ii) Inkontaktbringen der Eduktfluidströme mit in den Reaktoren (5, 5', 5", ...) befindlichen Katalysatoren,
(iii) Ableitung der Produktfluidströme durch Ausgangsleitungen,
(iv) Öffnen eines Absperrventils (10) eines ausgewählten Regelkanals (7),
(v) Aufnahme des Ist-Wertes des zumindest einen Bauteils (8) zum Ändern und Steuern von Stoffströmen am Druckregler (11) und Vergleich mit einem vorgegebenen Ziel-Wert
(vi) Einregeln eines Druckwertes des Bauteils (8) am Druckregler (11) auf einen Ziel-Wert, der in der Programmsteuerung hinterlegt ist, sowie anschließendes Schließen des Absperrventils (10) des ausgewählten Regelkanals (7);
wobei die Verfahrensschritte (iv) - (vi) wiederholt werden, wobei sämtliche Regelkanäle (7) der in der Vorrichtung angeordneten Reaktoren den Schritten (iv) - (vi) unterzogen werden.

10. Verfahren zur Durchführung von chemischen Reaktionen nach Anspruch 9, das **dadurch gekennzeichnet ist, dass** die Regelkanäle (7, 7', 7", ...) der Reaktoren (5, 5', 5", ...) sequentiell abgetastet und angepasst werden, wobei die Regelkanäle (7, 7', 7", ...) von RKᵢ mit i = 1 - n durchlaufen werden, wobei vorzugsweise das Abtasten und Anpassen der Regelkanäle (7, 7', 7", ...) in einer Reihenfolge erfolgt, die von einer Programmsteuerung gesteuert oder geregelt wird.

11. Verfahren zur Durchführung von chemischen Reaktionen nach Anspruch 9 oder Anspruch 10, das **dadurch gekennzeichnet ist, dass** das Verfahren eine Bestimmung des Druckwertes in der Ausgangsleitung zu jedem separaten Regelkanal (7) umfasst, wobei die Druckwerte von einer Programmsteuerung ausgewertet werden.

12. Verfahren zur Durchführung von chemischen Reaktionen einem der Ansprüche 9 - 11, das **dadurch gekennzeichnet ist, dass** die chemischen Reaktionen bei einem Druck im Bereich von 0,5 - 300 bara durchgeführt werden, vorzugsweise im Bereich von 1 - 250 bara, weiter vorzugsweise im Bereich von 1,2 - 220 bara, und/oder dass das Verfahren bei einer Gaslast durchgeführt wird, bei der die GHSV im Bereich von 500 - 150.000 h-1 liegt, weiter vorzugsweise liegt die GHSV in einem Bereich von 750 - 100.000 h⁻¹, darüber hinaus bevorzugt liegt die GHSV in einem Bereich von 1.000 - 75.000 h⁻¹; und wobei das Verfahren bei einer Flüssigkeitslast durchgeführt wird, wobei die LHSV im Bereich von 0,2 - 10 h⁻¹ liegt, vorzugsweise 0,5 - 3 h⁻¹, und/oder wobei die Temperatur der Reaktionen im Bereich von 20 - 1.000 °C liegt, vorzugsweise im Bereich von 100 - 900 °C, darüber hinaus bevorzugt im Bereich von 200 - 800 °C.

13. Verfahren zur Durchführung von chemischen Reaktionen einem der Ansprüche 9 - 12, das **dadurch gekennzeichnet ist, dass** die für die Regelarmaturen (8) verwendeten Ventile Einschwingzeiten besitzen, die 10 Sekunden oder weniger betragen.

14. Verwendung einer Vorrichtung zu Durchführung von chemischen Reaktionen, die die Merkmale aufweist, die in den Ansprüchen 1 - 8 aufgeführt werden, wobei mittels der Vorrichtung ein Verfahren durchgeführt wird, das durch die Ansprüche 9 - 13 gekennzeichnet ist.
